# FASCICULE DE BREVET EUROPEEN

(11) **EP 2 919 035 B1**
(45) Date de publication et mention de la délivrance du brevet: **19.04.2017**
(21) Numéro de dépôt: 15158722.7
(22) Date de dépôt: 12.03.2015
(51) Int. Cl.: G01S 19/07, G01S 19/32

(54) **SYSTÈME ET PROCÉDÉ DE DIFFUSION D'INFORMATIONS DANS UN SYSTÈME SATELLITAIRE BI-FRÉQUENCE**
SYSTEM UND VERFAHREN ZUR INFORMATIONSVERBREITUNG IN EINEM DOPPELFREQUENZ-SATELLITENSYSTEM
SYSTEM AND METHOD FOR BROADCASTING INFORMATION IN A BI-FREQUENCY SATELLITE SYSTEM

(30) Priorité: 14.03.2014 FR 1400613
(43) Date de publication de la demande: 16.09.2015
(73) Titulaire: Thales, 92400 Courbevoie (FR)
(72) Inventeur: Lobert, Bruno, 31037 TOULOUSE Cedex (FR); Dunas, Etienne, 31037 TOULOUSE (FR)
(74) Mandataire: Dudouit, Isabelle

(56) Documents cités:
- US-A1- 2007 067 073
- US-A1- 2013 088 385
- WALTER TODD ET AL: "Evolving WAAS to Serve L1/L5 Users", NAVIGATION, INSTITUTE OF NAVIGATION, FAIRFAX, VA, US, vol. 59, no. 4, 1 décembre 2012 (2012-12-01), pages 317-327, XP056000517, ISSN: 0028-1522
- PIEPLU J M ET AL: "EGNOS Transition into GALILEO", NTM 2001 - PROCEEDINGS OF THE 2001 NATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 24 janvier 2001 (2001-01-24), pages 787-795, XP056004670,

## Description

L'objet de l'invention concerne un procédé et son système pour diffuser des informations dans un système satellitaire assurant un service d'augmentation par satellite sur la fréquence L₁ ou SBAS fréquence L₁ acronyme anglo-saxon de « Satellite based augmentation system » et de manière synchrone un lien SBAS fréquence L₅. Les informations sont, par exemple, des données de correction (précision) et/ou des données de validation (intégrité) transmises pour des utilisateurs bi-fréquence L₁ et L₅.

Les données fournies par les systèmes de navigation par satellite de navigation GNSS (Global Navigation Satellite System) du type GPS (Global Positionning System) ou GLONASS sont améliorées par la technologie SBAS précitée. Cette technologie apporte une correction supplémentaire par satellite des erreurs inhérentes au système GPS, augmentant ainsi très sensiblement la précision des mesures de position des utilisateurs. Elle fournit aussi des garanties d'intégrité et de disponibilité. Les systèmes d'augmentation de la précision de positionnement par satellites SBAS sont aujourd'hui découpés en trois zones: l'EGNOS (European Geostationary Navigation Overlay Service) pour l'Europe, le WAAS (Wide Area Augmentation System) pour l'Amérique du Nord et le MSAS (Multifunctional Satellite augmentation System) pour le Japon.

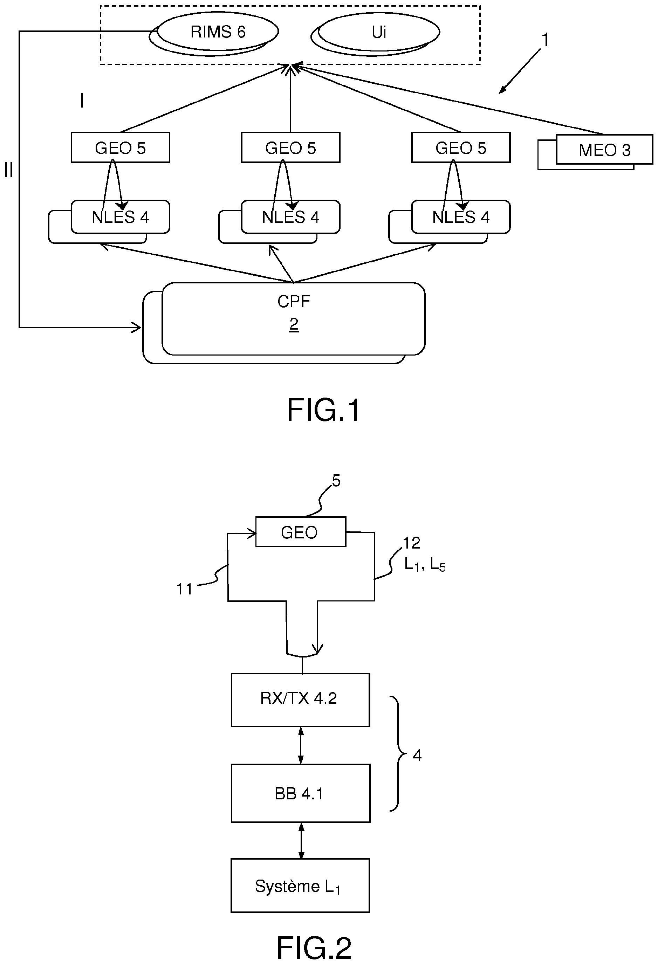

La figure 1 représente schématiquement un système 1 de navigation par satellite GPS utilisant la technologie SBAS. Le système 1 comporte dans cet exemple un ensemble de calculateurs 2, un ensemble de satellites MEO, 3, un ensemble de stations de transmission 4, plus connues dans le système EGNOS sous l'abréviation anglo-saxonne NLES (Navigation Land Earth Station), chaque station de transmission 4 communiquant avec un satellite géostationnaire 5, plusieurs stations de surveillance 6 reliées à l'ensemble de calculateurs 2, plusieurs utilisateurs Uᵢ. Dans le cas d'un système SBAS comme EGNOS, les stations de surveillance 6 sont des stations terrestres de référence de type « RIMS » (Ranging and Integrity Monitoring Station) et sont actuellement au nombre de plusieurs dizaines. Un calculateur 2 est du type calculateur central plus connu sous l'acronyme anglo-saxon « CPF » (Central Processing Facility). Le système peut comporter plusieurs calculateurs, par exemple cinq, permettant d'assurer une redondance en cas de différence de calcul et en cas de panne. A un moment donné, les calculateurs fonctionnent en parallèle et en permanence, pour la diffusion de données de correction vers les utilisateurs, un seul de ces calculateurs sera actif. Une station de transmission 4 est, par exemple, une station terrestre montante de navigation ou NLES (Navigation Land Earth Station) qui transmet les données du calculateur actif qu'elle choisit à chaque seconde parmi les cinq calculateurs, en fonction de l'indication sur la qualité de calcul que ceux-ci annoncent selon une méthode connue de l'homme du métier. Le satellite géostationnaire 5 est du type Inmarsat III, Inmarsat IV, ou SES-ASTRA, par exemple. Pour chaque satellite géostationnaire il y a, par exemple, une station de transmission active et une station de transmission en redondance.

Les stations de transmission 4 effectuent sur l'ensemble des satellites MEO et GEO des mesures de pseudo-distance, qui sont communiquées, avec le contenu des messages diffusés par les satellites, aux calculateurs 2. Ces derniers déterminent des données dites d'augmentation (appelées aussi NOF pour Navigation Overlay Frame) permettant notamment d'assurer les fonctions suivantes : des corrections différentielles de base, telles que la diffusion de corrections d'éphémérides et d'horloges relatives aux satellites GPS, des corrections ionosphériques, des données d'intégrité. Les données d'augmentation (NOF) sont combinées par le calculateur 2 avant d'être transmises vers la ou les stations de transmission 4, qui sont chargées de transmettre ces données d'augmentation vers le satellite géostationnaire associé 5. Le satellite géostationnaire redistribue les données d'augmentation Dₐ aux utilisateurs Uᵢ, U₁ à Uₖ, qui reçoivent également des signaux de navigation S_{N} des satellites 3. Les signaux de navigation S_{N} combinés aux données d'augmentation Dₐ permettent à un utilisateur Uᵢ de déterminer sa position P(Uᵢ) avec une précision accrue. Les données d'augmentation Dₐ sont fournies par le calculateur 2 avec une certaine intégrité, c'est-à-dire une capacité à fournir des données d'augmentation en indiquant aux utilisateurs si ces données sont fiables et utilisables, induisant ainsi un niveau de sécurité élevé compatible avec les exigences des aviations civiles. Pour émettre ces données d'intégrité, un calculateur 2 a besoin de recevoir en temps réel, en retour, l'ensemble des données qu'il émet (I) en permanence vers les utilisateurs. Si ce n'est pas le cas, le calculateur se déclare non intègre. Le calculateur vérifie ainsi lui-même les données qu'il a émises. Dans le cas du système EGNOS, le calculateur 2 reçoit en retour (II) les données qu'il a lui-même émises via le satellite géostationnaire 5 qui réémet ces données vers le calculateur via les stations de surveillance 6 RIMS. Le trajet des données correspond ainsi à une boucle (II) dite boucle d'intégrité. Un satellite géostationnaire qui émet en bande L notamment a donc une double fonction, d'une part de transmettre les données d'augmentation vers les utilisateurs, d'autre part d'assurer la boucle d'intégrité. De façon optionnelle, il peut également être l'objet de mesures de pseudo-distances par les utilisateurs du système.

La figure 2 représente le schéma d'émission des stations de transmission 4 vers un satellite 5. Une station de transmission NLES, 4, est composée par exemple d'une première partie 4.1, bande de base, ayant pour fonction de recevoir les données d'augmentation Dₐ à transmettre, de la part du ou des calculateurs, de générer et de synchroniser les signaux (message modulant une porteuse), la première partie étant reliée à une deuxième partie 4.2, composée d'une station émetteur/récepteur, RX/TX, qui émet, reçoit et amplifie les signaux radiofréquences RF. La station NLES transmet via une liaison montante 11, typiquement en bande C ou Ku, le signal opérationnel L₁ et le signal auxiliaire E₅ à transmettre vers le satellite géostationnaire 5 avec lequel la station est reliée. Les messages ou données d'augmentation Dₐ sont transmises sur le signal L₁ et correspondent aux données déterminées par le calculateur sélectionné par la station selon un principe connu de l'homme du métier. Le satellite 5 transpose les signaux reçus et les diffusent sur la liaison descendante 12 aux fréquences L₁ et E₅. La partie réceptrice de la station 4 reçoit, 4.2, ces deux signaux L₁, E₅, et vérifie qu'ils sont identiques à ceux qu'elle a émis. La partie bande de base 4.1 mesure un premier instant d'arrivée t(L₁) du signal L₁ et un deuxième temps d'arrivée t(E₅) du signal auxiliaire E₅ et détermine un premier écart temporel Δt(L₁) et un deuxième écart temporel Δt(E₅) par rapport à un temps de référence système t_{ref}. La station 4 va ensuite corriger l'instant d'émission t_{émis} des signaux diffusés sur les liaisons montantes pour chacun des signaux L₁ ou E₅ en fonction de l'écart temporel constaté sur les signaux reçus. L'asservissement des signaux sur un temps de référence t_{ref}, tel que décrit ci-dessus, est appelé boucle longue. Le but de cet asservissement est de synchroniser le temps d'émission du signal L₁ au niveau satellite sur une référence de temps système, pouvant être décidée comme étant le temps GPS. Le signal auxiliaire E₅ est nécessaire pour corriger le retard ionosphérique sur la voie descendante.

Actuellement, les standards SBAS L₁ considèrent uniquement des utilisateurs mono-fréquence avec une diffusion des corrections par le SBAS à la fréquence L₁. L'un des problèmes posés est d'introduire de nouveaux services dans le système pour des utilisateurs bi-fréquence L₁-L₅ tout en minimisant les impacts sur le fonctionnement opérationnel.

Une solution consisterait à introduire le service L₅ au niveau des stations NLES en remplaçant les stations L₁ existantes par de nouvelles stations NLES L₁-L₅. Cette solution présente les inconvénients majeurs suivants :
- une impossibilité de partager, pendant les phases de test et de validation pouvant durer de nombreux mois, les satellites géostationnaires tous visibles du grand public; il faudrait donc à la fois disposer de satellites supplémentaires équipés de charges utiles de navigation pour permettre la migration de l'ancien système vers le nouveau système, sans interruption du service L₁, ainsi que modifier l'ensemble des récepteurs grand-public et embarqués en service pour qu'ils ignorent cette phase de transition
- la nécessité de modifier sensiblement l'ancien système SBAS L₁, voir de le remplacer entièrement par un SBAS L₁/L₅, avec pour conséquence de devoir repasser par une phase de validation et certification complète, y compris pour les services L₁,
- des impacts collatéraux en cas de défaillance sur l'un des services (par exemple discontinuité de services), le couplage des services sur L₁ et L₅ liant de-facto la gravité de services de nature potentiellement différent, et rendant extrêmement complexe la synchronisation des basculements de redondances en cas de besoin suivant la qualité de chacun des services,
- d'une manière générale, un scénario de migration complexe induisant un risque de perturbation du service L₁.

Une optimisation proposée dans l'art antérieur consiste en une modification des stations du système SBAS L₁ pour leur permettre de diffuser aussi les corrections sur L₅. Cette optimisation ne pallie que partiellement les inconvénients exposés précédemment.

Le document intitulé « Evolving WAAS to Serve L1/L5 Users », de Walter TODD, Navigation, Institute of Navigation, Fairfax, XP056000517 décrit un système associant à un satellite NLES L₁, une station bi-fréquence.

Un des objectifs de la présente invention est de proposer un procédé et un système pour des utilisateurs bi-fréquences et multi-constellations, notamment pour des utilisateurs qui vont utiliser les fréquences L₁ et L₅ émises par les satellites MEO (GPS, GALILEO, GLONASS, ..) afin de transmettre des données d'augmentation de manière synchronisée.

Le procédé selon l'invention repose notamment sur la mise en oeuvre d'un asservissement consistant à synchroniser le message opérationnel L₅, émis par une station L₅, sur le message auxiliaire de synchronisation E₅ de la station L₁ permettant de transmettre des données d'augmentation Dₐ. Cette synchronisation est réalisée au niveau de la station L₅ par une boucle d'asservissement secondaire qui compare les instants d'arrivée des messages auxiliaire E₅ et opérationnel L₅ et qui adapte en fonction l'émission du message L₅ opérationnel.

L'invention concerne un procédé pour transmettre des informations ou données « de correction » Dₐ dans un système de navigation par satellites bi-fréquence comprenant au moins un satellite SBAS pour redistribuer les données de correction Dₐ à plusieurs utilisateurs (U), une ou plusieurs premières stations NLES L₁ délivrant des services d'augmentation par satellite SBAS L₁ et un signal auxiliaire et une ou plusieurs deuxièmes stations NLES délivrant des services SBAS L₅, caractérisé en ce que :
- une première station NLES L₁ transmet un message SBAS L₁ modulant une porteuse UL₁ et un message auxiliaire E₅ modulant une porteuse UL₅ vers un satellite,
- une deuxième station NLES L₅ transmet un message SBAS L₅ modulant une porteuse UL₅ vers un satellite,
- le satellite (5) retransmet les messages SBAS L₁ et SBAS L₅ vers un ou plusieurs utilisateurs Ui,
- le satellite transmet le message SBAS E₅ et le message SBAS L₅ vers la deuxième station NLES L₅, la deuxième station NLES L₅ synchronise en phase et en fréquence l'émission du message L₅ et de sa porteuse UL₅ sur le message E₅ et sa porteuse DL₅, afin que le message L₁ et le message L₅ soient émis en même temps ou avec un biais constant connu des utilisateurs au niveau du satellite SBAS pour que les données et mesures dépendantes de l'écart entre L₁ et L₅ soient traitées correctement par un ou plusieurs utilisateurs Ui.

Le procédé peut comporter au moins les étapes suivantes :
- au niveau d'une première station NLES L₁, un module émetteur/récepteur transmet des informations de correction vers le satellite au moyen d'un message L₁ modulant une porteuse UL₁, ainsi qu'un message auxiliaire de synchronisation E₅ modulant une porteuse UL₅, et reçoit en retour les messages L₁ et E₅ modulant respectivement des porteuses DL₁ et DL₅,
- au niveau d'une deuxième station NLES L₅, un module émetteur/récepteur transmet le message L₅ modulant une porteuse UL₅ vers le satellite et reçoit en retour le message L₅ modulant une porteuse DL₅ et le message auxiliaire E₅ modulant une porteuse DL₅ généré par la première station NLES L₁ et retransmis par le satellite,
- au niveau de la deuxième station NLES L₅, un dispositif complémentaire ou intégré au dispositif synchronise en fréquence et en phase l'émission du message L₅ et sa porteuse UL₅ sur le message E₅ et sa porteuse DL₅.

Selon une variante de réalisation, le procédé utilise un dispositif émetteur-récepteur commun à une première station NLES L₁ et à une deuxième station NLES L₅ et il comporte au moins les étapes suivantes :
- au niveau de la première station NLES L₁, le dispositif émetteur/récepteur transmet des informations de correction Dₐ vers un satellite géostationnaire au moyen d'un message L₁ modulant une porteuse UL₁, ainsi qu'un message auxiliaire de synchronisation E₅ modulant une porteuse UL₅ et reçoit en retour les messages L₁ et E₅ modulant respectivement des porteuses DL₁ et DL₅,
- au niveau de la deuxième station NLES L₅, le dispositif émetteur/récepteur transmet le message L₅ vers le satellite et reçoit le message L₅ modulant une porteuse DL₅ ainsi que le message auxiliaire E₅ modulant une porteuse DL₅ généré par la station NLES L₁ et retransmis par le satellite,
- au niveau de la deuxième station NLES L₅, un dispositif complémentaire ou intégré au dispositif synchronise en fréquence et en phase l'émission du message L₅ et sa porteuse UL₅ sur le message E₅ et sa porteuse DL₅.

Selon un mode de réalisation, on synchronise l'émission du message L₅ et sa porteuse UL₅ en fonction de l'instant d'arrivée du message E₅.

Les messages L₁, L₅ et E₅ modulent, par exemple, des codes périodiques permettant de déterminer le début des cycles et l'instant de début des messages modulant ces codes.

Il est possible de synchroniser l'instant de début de cycle d'émission du message L₅ en fonction du début de cycle à l'arrivée du message L₅ par rapport à l'instant de début de cycle à l'arrivée du message E₅.

Selon un mode de réalisation, le procédé utilise des bandes de fréquences identiques pour les messages L₅ et E₅.

L'invention concerne aussi un système pour transmettre des informations ou données « de correction » dans un système satellitaire comprenant au moins un satellite, une ou plusieurs stations premières stations NLES délivrant des messages SBAS L₁ et un message auxiliaire E₅ caractérisé en ce qu'il comporte au moins les éléments suivants :
- au moins un module d'émission/réception de messages des services L₁, E₅, L₅,
- au moins une deuxième station NLES délivrant des services SBAS L₅, ladite au moins une station NLES transmettant via le module d'émission un message L₅ modulant une porteuse UL₅ vers le satellite et recevant un message E₅ modulant une porteuse UL₅ retransmis par le satellite la station NLES L₅ comprenant un moyen de synchronisation de l'émission du message L₅ sur le message E₅ selon le procédé précité.

Selon un mode de réalisation, le module d'émission/réception comprend, par exemple, un premier module d'émission/réception lié à la première station NLES L₁ et un deuxième module d'émission/réception lié à la deuxième station NLES L₅.

Selon une autre variante, le module d'émission/réception des signaux de service est un module partagé entre une première station NLES L₁ et une deuxième station NLES L₅.

Le système peut comporter un ou plusieurs filtres adaptés à sélectionner les signaux de services parmi des composantes indésirables.

Le satellite est par exemple un satellite géostationnaire.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, une représentation d'un système de navigation par satellite de type SBAS,
- La figure 2, le schéma d'émission de stations de transmission du système de la figure 1,
- La figure 3, une représentation d'un système de navigation par satellite de type SBAS assurant les services mono-fréquence L₁ et bi-fréquences L₁-L₅,
- La figure 4, un exemple d'architecture d'un système permettant la mise en oeuvre d'une première variante du procédé selon l'invention,
- La figure 5, un exemple pour la mise en oeuvre d'une deuxième variante du procédé selon l'invention.

Le procédé selon l'invention consiste notamment à :
- conserver le système existant SBAS L₁, sans modification des stations L₁,
- développer pour les nouveaux services une composante nouvelle permettant de calculer les corrections Dₐ à diffuser sur L₅,
- diffuser ces nouvelles corrections à l'aide de stations L₅ asservies sur les stations L₁, co-localisées ou non avec les stations L₁.

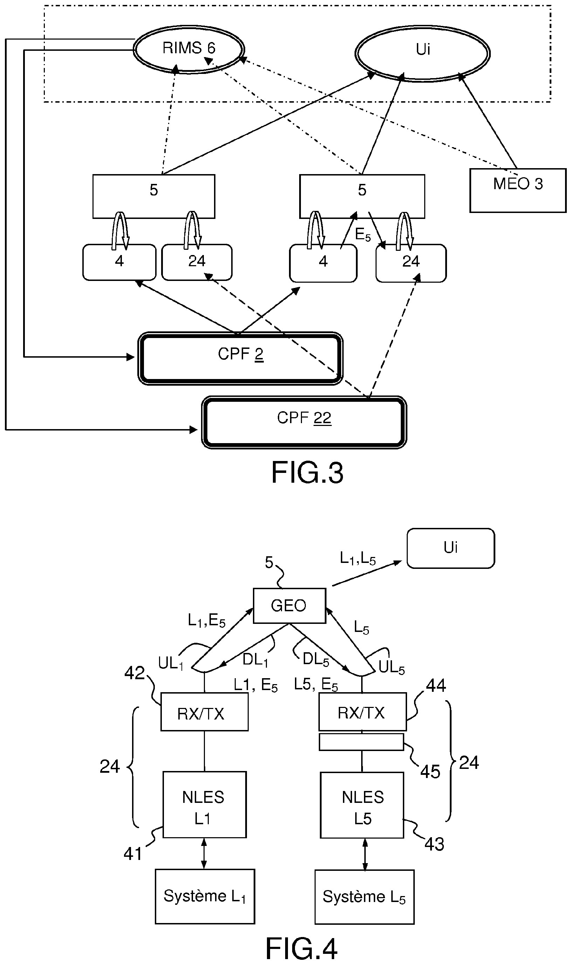

La figure 3 représente est un premier exemple de système pour la mise en oeuvre d'une première variante du procédé selon l'invention. Les références communes aux éléments figurant sur les deux figures 1 et 3 désignent les mêmes éléments du dispositif, présentant des fonctionalités similaires.

L'exemple de système décrit à la figure 3 comporte en plus des éléments de la figure 1, une ou plusieurs stations de transmission NLES 24, qui sont adaptées au service L₅. Par exemple, un satellite géostationnaire 5 va être en liaison avec une station NLES 4, service L₁ et une station de transmission NLES 24, service L₅. Sur cet exemple, on a représenté un deuxième ensemble de calculateurs 22 en liaison avec les stations de transmission NLES 24. On conserve un même réseau de RIMS 6 pour cet exemple, mais on pourrait utiliser un réseau de RIMS pour chaque ensemble de calculateurs 2, 22. Il est aussi possible d'utiliser un même ensemble de calculateurs 2 pour les stations NLES, service L₁ et pour les stations NLES, service L₅.

Le système de la figure 3 assure le service L₁ seul ou« L₁-only » et la diffusion ou « broadcast » des données d'augmentation, NOF L₁, et le service L₅ qui regroupe, les services bi-constellation, bi-fréquence. Le système génère en particulier les données d'augmentation, NOF L₅. Les NOF L₁ et L₅ sont indépendants; aucun utilisateur Ui n'a besoin d'exploiter simultanément les messages sur L₁ et sur L₅. Ceci présente l'avantage suivant : la génération des NOFs par le calculateur de L₁ et par le calculateur de L₅ peut être faite indépendamment l'une de l'autre, les référentiels de temps pouvant être éventuellement différents.

Dans ce premier exemple de mise en oeuvre détaillé à la figure 4, le système comprend pour chaque station NLES L₁ ou L₅ un dispositif émetteur/récepteur propre.

Comme il a été décrit précédemment, la station 4 NLES L₁ va exécuter la boucle longue II décrite à la figure 1. La station NLES L₁ comporte une partie bande de base 41 ayant pour fonction de recevoir les données d'augmentation ou de correction Dₐ à transmettre, de générer et de synchroniser les signaux et un module émetteur/récepteur 42 qui émet, reçoit et amplifie les signaux. La station NLES L₁ transmet un message SBAS L₁ modulant une porteuse UL₁ et un message auxiliaire E₅ modulant une porteuse UL₅ vers le satellite 5, typiquement en bande C ou Ku vers le satellite géostationnaire 5 associé. Le module émetteur/récepteur 42 transmet, par exemple, des informations de correction Dₐ vers le satellite 5 au moyen du message L₁ modulant une porteuse UL₁.

La première station 4 reçoit (module émetteur/récepteur 42) en retour le message opérationnel L₁ modulant une porteuse DL₁ et le message auxiliaire E₅ modulant une porteuse DL₅.

La deuxième station 24, NLES L₅ comporte une partie bande de base 43 similaire à la partie 41 associée à un module émetteur/récepteur 44. La deuxième station 24 transmet un message SBAS L₅ modulant une porteuse UL₅ vers le satellite géostationnaire 5 et reçoit en retour le message L₅ modulant une porteuse DL₅ et le message auxiliaire E₅ modulant une porteuse DL₅, E₅ étant généré par la première station NLES L₁ et retransmis par le satellite 5. La deuxième station 24, NLES L₅ comprend un module 45 adapté à synchroniser en phase et en fréquence l'émission du message L₅ et de sa porteuse UL₅ sur le message E₅ et sa porteuse DL₅. Le module de synchronisation est par exemple adapté à calculer l'écart de temps ΔT existant entre l'instant d'arrivée t(L₅) du message L₅ modulant une porteuse DL₅ et l'instant d'arrivée t(E₅) du message auxiliaire E₅ modulant une porteuse DL₅.

Le satellite géostationnaire 5 transmet le message L₁ et le message L₅ vers les utilisateurs Ui concernés.

Le message L₁ et le message L₅ doivent être émis en même temps au niveau du satellite géostationnaire, ou quasiment en même temps pour que les mesures de pseudo-distances effectuées par l'utilisateur sur les satellites géostationnaires puissent être traitées correctement par l'utilisateur. Les messages peuvent être émis avec un biais constant connu des utilisateurs Uᵢ. La station NLES L₅ va assurer la synchronisation des deux messages L₁, L₅, en synchronisant l'émission du message L₅ en fonction, par exemple, de l'instant d'arrivée du message E₅. La synchronisation est telle que le message L₁ et le message L₅ sont émis en même temps ou avec un biais constant connu des utilisateurs Uᵢ au niveau du satellite SBAS afin que les données et mesures indépendantes de l'écart entre L₁ et L₅ puissent être traitées correctement par un ou plusieurs utilisateurs Uᵢ selon des principes connus de l'homme du métier.

L'utilisation de spectre étalé et de code pseudo-aléatoires cycliques pour les messages L₁, L₅ et E₅ permet notamment de partager la même bande de fréquence et d'effectuer des mesures de temps d'arrivée très précises.

Les messages L₁, L₅ et E₅ modulent, par exemple, des codes périodiques permettant de déterminer le début des cycles et l'instant de début des messages modulant ces codes.

On synchronise, par exemple, l'instant de début de cycle d'émission du message L₅ en fonction du début de cycle à l'arrivée du message L₅ par rapport à l'instant de début de cycle à l'arrivée du message E₅.

Le principe de mesure de temps d'arrivée d'un signal à spectre étalé, communément utilisé au niveau des récepteurs GNSS, consiste à générer, à partir d'une horloge locale Hr, un signal ayant la même forme d'onde que le signal attendu et à faire coïncider temporellement le code et la porteuse du signal généré avec le signal reçu. Lorsque le synchronisme est atteint le temps de réception est égal au temps de génération de la réplique qui est lui-même connu par rapport à l'horloge locale. Pour maintenir la synchronisation dans le temps on a généralement recours à des boucles d'asservissement de code et de phase qui, à partir des écarts constatés sur les codes et les porteuses, corrigent la génération de la réplique selon des méthodes connues de l'homme du métier.

Dans le cas de la station NLES L₅, il suffit de mesurer les temps d'arrivée t(E₅), t(L₅) des messages E₅ et L₅ par rapport à l'horloge locale Hr du récepteur GNSS de la station NLES L₅, et de calculer la différence t(E₅) - t(L₅) pour déterminer l'écart de temps d'arrivée ΔT entre ces deux messages. La connaissance de cet écart de temps permet d'avancer ou de retarder la génération du message L₅ pour le synchroniser avec l'émission du message E₅ au niveau de la réception dans la NLES L₅. Le système pourra comporter un ou plusieurs filtres adaptés à sélectionner les signaux de services parmi les composantes indésirables. Pour cela, on utilise des filtres et des méthodes connues de l'homme du métier disposés au niveau du récepteur GNSS.

Les messages E₅ et L₅, étant émis à des bandes de fréquences identiques ou très voisines, ont des temps de propagation quasi-identiques, éventuellement calibrables, depuis une antenne du satellite jusqu'au point de référence dans la NLES L₅ pour la mesure des temps d'arrivée. Il en résulte donc que la simultanéité de la réception assure par ce fait la coïncidence des temps d'émission au niveau du satellite. Dans le cas où les fréquences ne sont pas strictement identiques il est néanmoins souhaitable, pour améliorer la précision de synchronisation, de compenser la différence de temps de propagation des signaux E₅ et L₅ au travers de la ionosphère, par une estimation de cette différence obtenue grace à un model ionosphérique (Klobuchar ou grille ionosphérique calculée par les calculateurs 2 ou 22).

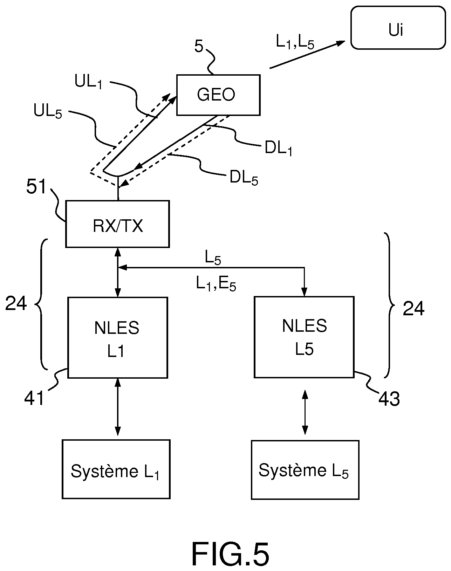

La figure 5 schématise une autre variante de mise en oeuvre du procédé. Dans cet exemple, la partie bande de base de la station NLES L₁, 41 et la partie bande de base de la station NLES L₅, 43, sont en liaison avec une même station d'émission réception 51 partagée entres les composantes des messages L₁ et L₅. Dans cette variante l'utilisateur recevra de la même manière que précédemment les messages L₁ et L₅.
Comme il a été décrit précédemment la partie bande de base de la station 41, NLES L₁ va exécuter la boucle longue II décrite à la figure 1.
- au niveau de la première station NLES L₁, 41, le dispositif émetteur/récepteur 51 transmet des informations de correction Dₐ vers un satellite géostationnaire 5 au moyen d'un message L₁ modulant une porteuse UL₁, ainsi qu'un message auxiliaire de synchronisation E₅ modulant une porteuse UL₅, et reçoit en retour les messages L₁ et E₅ modulant respectivement des porteuses DL₁ et DL₅,
- au niveau de la deuxième station NLES L₅, 43, le dispositif émetteur/récepteur 51 transmet le message L₅ vers le satellite 5 et reçoit le message L₅ ainsi que le message auxiliaire E₅ généré par la station NLES L₁ et retransmis par le satellite,
- au niveau de la deuxième station NLES L₅, 43, un dispositif complémentaire ou intégré au dispositif 51 synchronise en fréquence et en phase l'émission du message L₅ et sa porteuse UL₅ sur le message E₅ et sa porteuse DL₅.

L'ensemble des messages L₁, E₅, L₅ reçus par la station émetteur/récepteur 51 est transmis simultanément aux deux stations NLES L₁, 41 et L₅ ,43. La station NLES L₁ utilise comme précédemment les messages L₁ et E₅ pour assurer le fonctionnement de la boucle longue précitée. La station NLES L₅, 43, traite les messages L₅ et E₅ et a notamment pour fonction de calculer l'écart de temps ΔT existant entre l'instant d'arrivée t(L₅) de L₅ et l'instant d'arrivée t(E₅) du signal auxiliaire E₅. La méthode d'asservissement du signal L₅ sur le signal E₅ est identique à celle décrite précédemment à la figure 4.

Cette deuxième solution permet avantageusement de partager les équipements de la station d'émission/réception grâce à un couplage très simple qui s'effectue uniquement au niveau radiofréquence, il n'y pas besoin d'interface numérique, ni de messages échangés entre L₁ et L₅. Les variations différentielles pouvant exister sur les chemins RF, sont considérablement réduites du fait de ce partage de station Rx/Tx.

La description qui vient d'être donnée est utilisée pour des satellites de type géostationnaire, ou encore pour des satellites placés sur des orbites inclinées de type IGSO ou elliptique. Les hypothèses suivantes doivent être vérifiées : le satellite reste en visibilité permanente ou quasi-permanente des stations, le satellite est équipé d'une charge utile transparente pouvant être appelée « SBAS3 qui réémet les signaux reçus après transposition de fréquence.

Le procédé et le système selon l'invention offrent la possibilité de diffuser sur le signal L₅ des données d'augmentation sans avoir besoin de satellites géostationnaires supplémentaires. L'invention permet, notamment, le maintien du service L₁ sans interruption, puisqu'il n'y a pas de nécessité à modifier la composante SBAS L₁, et garantit que le fonctionnement de la composante L₅, ne perturbera pas le service L₁, du fait de la séparation des stations tant logique que physique ou géographique. Elle n'apporte pas de dégradation des performances mission (précision, continuité, disponibilité, intégrité..) et reste conforme au dossier de certification d'un système.

## Revendications

1. Procédé pour transmettre des informations ou données « de correction » Dₐ dans un système de navigation par satellites bi-fréquence comprenant au moins un satellite SBAS (5) adapté à distribuer les données de correction Dₐ à un ou plusieurs utilisateurs (Uᵢ), une ou plusieurs premières stations (4) NLES délivrant des services d'augmentation par satellite SBAS L₁ et un signal auxiliaire et une ou plusieurs deuxièmes stations (24) NLES L₅ délivrant des services SBAS L₅, **caractérisé en ce que** :
• une première station (4) NLES L₁ transmet un message SBAS L₁ modulant une porteuse UL₁ et un message auxiliaire E₅ modulant une porteuse UL₅ vers un satellite (5),
• une deuxième station (24) NLES L₅ transmet un message SBAS L₅ modulant une porteuse UL₅ vers un satellite (5),
• le satellite (5) transmet les messages SBAS L₁ et SBAS L₅ vers un ou plusieurs utilisateurs Uᵢ,
• le satellite (5) transmet le message SBAS E₅ et le message SBAS L₅ vers la deuxième station (24) NLES L₅, la deuxième station NLES L₅ synchronise en phase et en fréquence l'émission du message L₅ et de sa porteuse UL₅ sur le message SBAS E₅ et sa porteuse DL₅ afin que le message L₁ et le message L₅ soient émis en même temps ou avec un biais constant connu des utilisateurs (Uᵢ) au niveau du satellite SBAS.

2. Procédé selon la revendication 1 **caractérisé en ce qu'**il comporte au moins les étapes suivantes :
• au niveau d'une première station (4) NLES L₁, un module émetteur/récepteur (42) transmet des informations de correction vers le satellite (5) au moyen d'un message L₁ modulant une porteuse UL₁, ainsi qu'un message auxiliaire de synchronisation E₅ modulant une porteuse UL₅, et reçoit en retour les messages L₁ et E₅ modulant respectivement des porteuses DL₁ et DL₅,
• au niveau d'une deuxième station (24) NLES L₅, un module émetteur/récepteur (44) transmet le message L₅ modulant une porteuse UL₅ vers le satellite (5) et reçoit en retour le message L₅ modulant une porteuse DL₅ et le message auxiliaire E₅ modulant une porteuse DL₅ généré par la première station NLES L₁ et retransmis par le satellite (5),
• au niveau de la deuxième station (24) NLES L₅, un dispositif complémentaire ou intégré au dispositif (44) synchronise en fréquence et en phase l'émission du message L₅ et sa porteuse UL₅ sur le message E₅ et sa porteuse DL₅.

3. Procédé selon la revendication 1 **caractérisé en ce que** l'on utilise un dispositif émetteur-récepteur (51) commun à une première station NLES L₁ (41) et à une deuxième station NLES L₅ (43) et **en ce qu'**il comporte au moins les étapes suivantes :
• au niveau de la première station NLES L₁, le dispositif émetteur/récepteur (51) transmet des informations de correction Dₐ vers un satellite géostationnaire (5) au moyen d'un message L₁ modulant une porteuse UL₁, ainsi qu'un message auxiliaire de synchronisation E₅ modulant une porteuse UL₅ et reçoit en retour les messages L₁ et E₅ modulant respectivement des porteuses DL₁ et DL₅,
• au niveau de la deuxième station NLES L₅, le dispositif émetteur/récepteur (51) transmet le message L₅ vers le satellite (5) et reçoit le message L₅ modulant une porteuse DL₅ ainsi que le message auxiliaire E₅ modulant une porteuse DL₅ généré par la station NLES L₁ et retransmis par le satellite (5),
• au niveau de la deuxième station NLES L₅, un dispositif complémentaire ou intégré au dispositif (51) synchronise en fréquence et en phase l'émission du message L₅ et sa porteuse UL₅ sur le message E₅ et sa porteuse DL₅.

4. Procédé selon l'une des revendications 2 ou 3 **caractérisé en ce que** l'on synchronise l'émission du message L₅ et sa porteuse UL₅ en fonction de l'instant d'arrivée du message E₅.

5. Procédé selon l'une des revendications 1 à 4 **caractérisé par le fait que** les messages L₁, L₅ et E₅ modulent des codes périodiques permettant de déterminer le début des cycles et l'instant de début des messages modulant ces codes.

6. Procédé selon l'une des revendications précédentes **caractérisé en ce que** l'on synchronise l'instant de début de cycle d'émission du message L₅ en fonction du début de cycle à l'arrivée du message L₅ par rapport à l'instant de début de cycle à l'arrivée du message E₅.

7. Procédé selon l'une des revendications 1 à 5 **caractérisé en ce que** l'on utilise des bandes de fréquences identiques pour les messages L₅ et E₅.

8. Système pour transmettre des informations ou données « de correction » dans un système satellitaire comprenant au moins un satellite (5), une ou plusieurs premières stations (4) NLES délivrant des messages SBAS L₁ et un message auxiliaire E₅ **caractérisé en ce qu'**il comporte au moins les éléments suivants :
• au moins un module d'émission/réception (51, 42, 44) de messages des services L₁, E₅, L₅,
• au moins une deuxième station (24) NLES délivrant des services SBAS L₅, ladite au moins deuxième station (24) NLES transmettant via le module d'émission un message L₅ modulant une porteuse UL₅ vers le satellite (5) et recevant un message E₅ modulant une porteuse UL₅ retransmis par le satellite (5) la station NLES L₅ comprenant un moyen de synchronisation de l'émission du message L₅ sur le message E₅ selon les étapes du procédé selon l'une des revendications 1 à 7.

9. Système selon la revendication 8 **caractérisé en ce que** le module d'émission/réception comprend un premier module d'émission/réception (42) lié à la première station (4) NLES L₁ et un deuxième module d'émission/réception (44) lié à la deuxième station (24) NLES L₅.

10. Système selon la revendication 8 **caractérisé en ce que** le module d'émission/réception des signaux de service est un module (51) partagé entre la première station (4) NLES L₁ et la deuxième station (24) NLES L₅.

11. Système selon l'une des revendications 8 à 10 **caractérisé en ce qu'**il comporte un ou plusieurs filtres adaptés à sélectioner les signaux de services parmi des composantes indésirables.

12. Système selon l'une des revendications 8 à 11 **caractérisé en ce que** le satellite (5) est un satellite géostationnaire.

## Patentansprüche

1. Verfahren zum Senden von "Korrektur"-Informationen oder Daten Dₐ in einem Doppelfrequenz-Satellitennavigationssystem, das wenigstens einen Satelliten SBAS (5) zum Verteilen der Korrekturdaten Dₐ zu einem oder mehreren Benutzern (Uᵢ) umfasst, wobei eine oder mehrere erste Stationen NLES (4) Satellitenerweiterungsdienste SBAS L₁ und ein Zusatzsignal liefern und eine oder mehrere zweite Stationen NLES L₅ (24) Dienste SBAS L₅ liefern, **dadurch gekennzeichnet, dass**:
• eine erste Station NLES L₁ (4) eine Nachricht SBAS L₁, die einen Träger UL₁ moduliert, und eine Zusatznachricht E₅, die einen Träger UL₅ moduliert, zu einem Satelliten (5) sendet;
• eine zweite Station NLES L₅ (24) eine Nachricht SBAS L₅, die einen Träger UL₅ moduliert, zu einem Satelliten (5) sendet;
• der Satellit (5) die Nachrichten SBAS L₁ und SBAS L₅ zu einem oder mehreren Benutzern Uᵢ sendet;
• der Satellit (5) die Nachricht SBAS E₅ und die Nachricht SBAS L₅ zur zweiten Station NLES L₅ (24) sendet, die zweite Station NLES L₅ die Sendung der Nachricht L₅ und ihres Trägers UL₅ auf der Nachricht SBAS E₅ und ihrem Träger DL₅ phasen- und frequenzsynchronisiert, so dass die Nachricht L₁ und die Nachricht L₅ gleichzeitig oder mit einer bekannten konstanten Schrägung der Benutzer (Uᵢ) auf dem Satelliten SBAS gesendet werden.

2. Verfahren nach Anspruch 1, **dadurch gekennzeichnet, dass** es wenigstens die folgenden Schritte beinhaltet:
• an einer ersten Station NLES L₁ (4) Senden, durch ein Transceiver-Modul (42), von Korrekturinformationen zu dem Satelliten (5) mittels einer Nachricht L₁, die einen Träger UL₁ moduliert, sowie einer Synchronisations-Zusatznachricht E₅, die einen Träger UL₅ moduliert, und Empfangen der Nachrichten L₁ und E₅ darauf, die jeweils die Träger DL₁ und DL₅ modulieren;
• an einer zweiten Station NLES L₅ (24) Senden, durch ein Transceiver-Modul (44), der Nachricht L₅, die einen Träger UL₅ moduliert, zu dem Satelliten (5), und Empfangen der Nachricht L₅, die einen Träger DL₅ moduliert, und der Zusatznachricht E₅ darauf, die einen Träger DL₅ moduliert, erzeugt von der ersten Station NLES L₁ und erneut gesendet von dem Satelliten (5);
• an der zweiten Station NLES L₅ (24) Frequenz- und Phasensynchronisieren, durch ein Gerät, das in dem Gerät (44) enthalten oder integriert ist, des Sendens der Nachricht L₅ und ihres Trägers UL₅ auf der Nachricht E₅ und ihrem Träger DL₅.

3. Verfahren nach Anspruch 1, **dadurch gekennzeichnet, dass** ein Transceiver-Gerät (51) benutzt wird, das einer ersten Station NLES L₁ (41) und einer zweiten Station NLES L₅ (43) gemeinsam ist, und dadurch, dass es wenigstens die folgenden Schritte beinhaltet:
• an der ersten Station NLES L₁ Senden, durch das Transceiver-Gerät (51), von Korrekturinformationen Dₐ zu einem geostationären Satelliten (5) mittels einer Nachricht L₁, die einen Träger UL₁ moduliert, sowie einer Synchronisations-Zusatznachricht E₅, die einen Träger UL₅ moduliert, und Empfangen der Nachrichten L₁ und E₅ darauf, die jeweils die Träger DL₁ und DL₅ modulieren;
• an der zweiten Station NLES L₅ Senden, durch das Transceiver-Gerät (51), der Nachricht L₅ zu dem Satelliten (5), und Empfangen der Nachricht L₅, die einen Träger DL₅ moduliert, sowie der Zusatznachricht E₅, die einen Träger DL₅ moduliert, erzeugt von der Station NLES L₁ und neu gesendet vom Satelliten (5);
• an der zweiten Station NLES L₅ Frequenz- und Phasensynchronisieren, durch ein Gerät, das in dem Gerät (51) enthalten oder integriert ist, des Sendens der Nachricht L₅ und ihres Trägers UL₅ auf der Nachricht E₅ und ihrem Träger DL₅.

4. Verfahren nach Anspruch 2 oder 3, **dadurch gekennzeichnet, dass** das Senden der Nachricht L₅ und ihres Trägers UL₅ in Abhängigkeit von der Ankunftszeit der Nachricht E₅ synchronisiert wird.

5. Verfahren nach einem der Ansprüche 1 bis 4, **dadurch gekennzeichnet, dass** die Nachrichten L₁, L₅ und E₅ periodische Codes modulieren, so dass der Start der Zyklen und der Startzeitpunkt der diese Codes modulierenden Nachrichten bestimmt werden können.

6. Verfahren nach einem der vorherigen Ansprüche, **dadurch gekennzeichnet, dass** der Startzeitpunkt des Sendezyklus der Nachricht L₅ in Abhängigkeit vom Zyklusstart bei Ankunft der Nachricht L₅ relativ zum Zyklusstartzeitpunkt bei Ankunft der Nachricht E₅ synchronisiert wird.

7. Verfahren nach einem der Ansprüche 1 bis 5, **dadurch gekennzeichnet, dass** identische Frequenzbänder für die Nachrichten L₅ und E₅ benutzt werden.

8. System zum Senden von "Korrektur"-Informationen oder Daten in einem Satellitensystem, das wenigstens einen Satelliten (5) und eine oder mehrere erste Stationen NLES (4) umfasst, die Nachrichten SBAS L₁ und eine Zusatznachricht E₅ liefern, **dadurch gekennzeichnet, dass** es wenigstens die folgenden Elemente umfasst:
• wenigstens ein Transceiver-Modul (51, 42, 44) für Service-Nachrichten L₁, E₅, L₅;
• wenigstens eine zweite Station NLES (24), die Services SBAS L₅ liefert, wobei die wenigstens eine zweite Station NLES (24) eine Nachricht L₅, die einen Träger UL₅ moduliert, über das Sendemodul zum Satelliten (5) sendet und eine Nachricht E₅ empfängt, die einen vom Satelliten (5) neu gesendeten Träger UL₅ moduliert, wobei die Station NLES L₅ ein Mittel zum Synchronisieren des Sendens der Nachricht L₅ auf der Nachricht E₅ gemäß den Schritten des Verfahrens nach einem der Ansprüche 1 bis 7 umfasst.

9. System nach Anspruch 8, **dadurch gekennzeichnet, dass** das Transceiver-Modul ein erstes Transceiver-Modul (42), das mit der ersten Station NLES L₁ (4) verbunden ist, und ein zweites Transceiver-Modul (44) umfasst, das mit der zweiten Station NLES L₅ (24) verbunden ist.

10. System nach Anspruch 8, **dadurch gekennzeichnet, dass** das Transceiver-Modul für die Service-Signale ein Modul (51) ist, das von der ersten Station NLES L₁ (4) und der zweiten Station NLES L₅ (24) gemeinsam genutzt wird.

11. System nach einem der Ansprüche 8 bis 10, **dadurch gekennzeichnet, dass** es ein oder mehrere Filter zum Auswählen der Service-Signale unter unerwünschten Komponenten umfasst.

12. System nach einem der Ansprüche 8 bis 11, **dadurch gekennzeichnet, dass** der Satellit (5) ein geostationärer Satellit ist.

## Claims

1. A method for transmitting "correction" information or data Dₐ in a bi-frequency satellite navigation system comprising at least one satellite SBAS (5) designed to broadcast said correction data Dₐ to one or more users (Uᵢ), one or more first stations NLES (4) delivering satellite enhancement services SBAS L₁ and an auxiliary signal and one or more second stations NLES L₅ (24) delivering services SBAS L₅, **characterised in that**:
• a first station NLES L₁ (4) transmits a message SBAS L₁ modulating a carrier UL₁ and an auxiliary message E₅ modulating a carrier UL₅ to a satellite (5);
• a second station NLES L₅ (24) transmits a message SBAS L₅ modulating a carrier UL₅ to a satellite (5);
• said satellite (5) transmits the messages SBAS L₁ and SBAS L₅ to one or more users Uᵢ;
• said satellite (5) transmits the message SBAS E₅ and the message SBAS L₅ to said second station NLES L₅ (24), said second station NLES L₅ phase and frequency synchronises the transmission of the message L₅ and of its carrier UL₅ on the message SBAS E₅ and its carrier DL₅, so that the message L₁ and the message L₅ are transmitted at the same time or with a known constant bias of the users (Uᵢ) on said satellite SBAS.

2. The message according to claim 1, **characterised in that** it comprises at least the following steps:
• a transceiver module (42) transmitting, at a first station NLES L₁ (4), correction information to said satellite (5) by means of a message L₁ modulating a carrier UL₁, as well as an auxiliary synchronisation message E₅ modulating a carrier UL₅ and in return receiving the messages L₁ and E₅ respectively modulating the carriers DL₁ and DL₅;
• a transceiver module (44) transmitting, at a second station NLES L₅ (24), the message L₅ modulating a carrier UL₅ to said satellite (5) and in return receiving the message L₅ modulating a carrier DL₅ and the auxiliary message E₅ modulating a carrier DL₅ generated by said first station NLES L₁ and re-transmitted by said satellite (5);
• a device frequency and phase synchronising, at said second station NLES L₅ (24), the transmission of the message L₅ and its carrier UL₅ on the message E₅ and its carrier DL₅, which device supplements or is integrated in the device (44).

3. The method according to claim 1, **characterised in that** a transceiver device (51) is used that is common to a first station NLES L₁ (41) and to a second station NLES L₅ (43), and **in that** it comprises at least the following steps:
• said transceiver device (51) transmitting, at said first station NLES L₁, correction information Dₐ to a geostationary satellite (5) by means of a message L₁ modulating a carrier UL₁, as well as an auxiliary synchronisation message E₅ modulating a carrier UL₅ and in return receiving the messages L₁ and E₅ respectively modulating the carriers DL₁ and DL₅;
• said transceiver device (51) transmitting, at said second station NLES L₅, the message L₅ to said satellite (5) and receiving the message L₅ modulating a carrier DL₅, as well as the auxiliary message E₅ modulating a carrier DL₅ generated by the station NLES L₁ and retransmitted by said satellite (5);
• a device frequency and phase synchronising, at said second station NLES L₅, the transmission of the message L₅ and its carrier UL₅ on the message E₅ and its carrier DL₅, which device supplements or is integrated in the device (51).

4. The method according to claim 2 or 3, **characterised in that** the transmission of the message L₅ and its carrier UL₅ is synchronised as a function of the time of arrival of the message E₅.

5. The method according to any one of claims 1 to 4, **characterised in that** the messages L₁, L₅ and E₅ modulate periodic codes that allow the start of the cycles and the start instant of the messages modulating these codes to be determined.

6. The method according to any one of the preceding claims, **characterised in that** the start instant of the transmission cycle of the message L₅ is synchronised as a function of the start of the cycle upon the arrival of the message L₅ relative to the start instant of the cycle upon the arrival of the message E₅.

7. The method according to any one of claims 1 to 5, **characterised in that** identical frequency bands are used for the messages L₅ and E₅.

8. A system for transmitting "correction" information or data in a satellite system comprising at least one satellite (5), one or more first stations NLES (4) delivering messages SBAS L₁ and an auxiliary message E₅, **characterised in that** it comprises at least the following elements:
• at least one transceiver module (51, 42, 44) for service messages L₁, E₅, L₅;
• at least one second station NLES (24) delivering services SBAS L₅, said at least one second station NLES (24) transmitting, via the transmission module, a message L₅ modulating a carrier UL₅ to said satellite (5) and receiving a message E₅ modulating a carrier UL₅ retransmitted by said satellite (5), said station NLES L₅ comprising a means for synchronising the transmission of the message L₅ with the message E₅ according to the steps of the method according to any one of claims 1 to 7.

9. The system according to claim 8, **characterised in that** said transceiver module comprises a first transceiver module (42) connected to said first station NLES L₁ (4) and a second transceiver module (44) connected to said second station NLES L₅ (24).

10. The system according to claim 8, **characterised in that** said transceiver module for the service signals is a module (51) that is shared between said first station NLES L₁ (4) and said second station NLES L₅ (24).

11. The system according to any one of claims 8 to 10, **characterised in that** it comprises one or more filters adapted to select the service signals from unwanted components.

12. The system according to any one of claims 8 to 11, **characterised in that** said satellite (5) is a geostationary satellite.
